Europäisches Patentamt

European Patent Office

Office européen des brevets

(19)

(11) **EP 0 730 139 B1**

(12) ## EUROPEAN PATENT SPECIFICATION

(45) Date of publication and mention
of the grant of the patent:
**03.03.2004 Bulletin 2004/10**

(51) Int Cl.⁷: **G01F 1/60**, G01F 1/58

(21) Application number: **95113657.1**

(22) Date of filing: **30.08.1995**

(54) **Electromagnetic flowmeter**

Magnetisch-induktiver Durchflussmesser

Débitmètre électromagnétique

(84) Designated Contracting States:
**DE FR GB**

(30) Priority: **02.03.1995 JP 4297295**

(43) Date of publication of application:
**04.09.1996 Bulletin 1996/36**

(73) Proprietor: **Yokogawa Electric Corporation
Tokyo 180-8750 (JP)**

(72) Inventor: **Torimaru, Takashi
Kodaira-shi, Tokyo 187 (JP)**

(74) Representative: **Henkel, Feiler, Hänzel
Möhlstrasse 37
81675 München (DE)**

(56) References cited:
EP-A- 0 304 774      EP-A- 0 521 169
EP-A- 0 557 529      JP-A- 55 033 685
US-A- 4 157 035      US-A- 5 325 728

## Description

BACKGROUND OF THE INVENTION

Field of the Invention

The present invention is related to an electromagnetic flow meter for converting the flow rate of a liquid to be measured to an electric signal and outputting a flow rate signal corresponding to the flow rate through detecting electrodes, and particularly to a power-thrifty electromagnetic flowmeter improved to increase S/N while reducing the energy requirement for excitation and signal processing.

Description of the Prior Art

As the conventional electromagnetic flowmeter for intermittently supplying an exciting current to an exciting coil to reduce the excitation energy, several examples can be given as described below.

First, there is an electromagnetic flowmeter disclosed in the Published Unexamined Patent Application No. 54-115163 (Title of the Invention: Electromagnetic Flowmeter). It is related to an electromagnetic flowmeter of low frequency excitation in which the excitation period is made shorter than the non-excitation period to reduce the mean power consumption as a whole.

Secondly, there is an electromagnetic flowmeter disclosed in the Published Unexamined Patent Application No. 55-33685 (Title of the Invention: Electromagnetic Flowmeter). It discloses a two-wire electromagnetic flowmeter in which power is transmitted as a current signal from a d.c. power supply on the load side to the transmitter side through two transmission lines, and this power supplies the all power required at the transmitter side, and the detected flow rate signal is transmitted to as a current signal to the load side through the transmission lines.

Thirdly, there is an electromagnetic flowmeter disclosed in the Published Unexamined Patent Application No. 55-76912 (Title of the Invention: Electromagnetic Flowmeter). It monitors an external signal, for instance, the variation of an electrode potential, and excitation is made only when the variation exists, thereby to reduce the overall exciting power.

Fourthly, there is an electromagnetic flowmeter disclosed in the Published Unexamined Patent Application No. 62-113019 (Title of the Invention: Electromagnetic Flowmeter). This is to supply positive and negative pulse-like exciting currents to an exciting coil, sample the signal during the time including each excitation period and until the differential noise disappears, thereby to remove the differential noise, and obtain a flow rate signal from the voltage difference between the positive and negative excitation levels by synchronous rectification.

However, since the above first conventional electromagnetic flowmeter performs the signal sampling after the differential noise due to the excitation rise disappears, the ON period ($\tau_{ON}$ of the excitation becomes long, and hence the excitation cycle also becomes long if it is attempted to maintain a predetermined repetition cycle, which results in a disadvantage that the response becomes slow.

The second conventional electromagnetic flowmeter basically consumes a low power as a whole as does the first prior art, but it has a problem that the power for excitation becomes large and the response becomes slow.

In addition, since the third conventional electromagnetic flowmeter carries out the signal sampling when a steady-state value is obtained, the time taken for the steady-state value to be reached becomes long as is the first prior art,.which leads to a disadvantage that the power for excitation becomes large.

Further, the fourth conventional electromagnetic flowmeter cannot uniquely determine the attenuation of the differential noise. Accordingly, if the sampling period is set sufficiently long, the noise during this period increases to degrade S/N, and if this period is set short, the effect of the differential noise appears. In addition, since a synchronous rectification is performed, a signal processing in the low-frequency region is necessary.

Moreover, since the synchronous rectification by the sample values based on a first and second reference pulses and the calculation of the difference between them are required, there is a problem that the hardware and software constructions become complex.

BRIEF SUMMARY OF THE INVENTION

According to the present invention the above object is achieved by an electromagnetic flowmeter according to claim 1. The dependent claims are related to further advantegous aspects of the present invention.

As the primary construction to solve the above problems, the present invention comprises, in an electromagnetic flowmeter for converting the flow rate of a liquid to be measured to an electric signal and outputting a flow rate signal corresponding to the flow rate through detecting electrodes, exciting means for intermittently causing an exciting current to flow thereby to apply a magnetic field to the fluid to be measured, the excitation period of the exciting means being shorter than the non-excitation period thereof, a.c. coupling means for obtaining an a.c. signal through an a.c. coupling of the inter-electrode signals outputted from the detecting electrode, sample and hold means for sampling and holding the a.c. signal with a sampling signal having a sampling width including the portions before and after the excitation period, and outputting it as a hold signal, switching means for switching to a reference potential before and after the period of sampling and holding, and signal processing means for using the hold signal to perform a signal processing and outputting it as the flow rate signal.

BRIEF DESCRIPTION OF THE DRAWING

FIG. 1 is a block diagram showing the construction of an embodiment of the present invention;

FIG. 2 is a circuit diagram showing the construction of the exciting circuit depicted in FIG. 1;

FIG. 3 is a waveform diagram for explaining the operation of the embodiment shown in FIG. 1;

FIG. 4 is a waveform diagram for explaining the operation of the exciting circuit depicted in FIG. 2;

FIG. 5 is a power supply circuit diagram showing the construction of the d.c. power supply including the exciting circuit depicted in FIG. 1;

FIG. 6 is a waveform diagram for explaining other waveforms of the exciting current depicted in FIG. 1;

FIG. 7 is a block diagram showing the construction of the first modified embodiment for the embodiment depicted in FIG. 1;

FIG. 8 is a block diagram showing the construction of the second modified embodiment for the embodiment depicted in FIG. 1;

FIG. 9 is a block diagram showing the construction of the third modified embodiment for the embodiment depicted in FIG. 1; and

FIG. 10 is a partial block diagram in which only the detecting means of the embodiment depicted in FIG. 1 was modified.

DETAILED DESCRIPTION OF THE PREFERRED EMBODIMENT

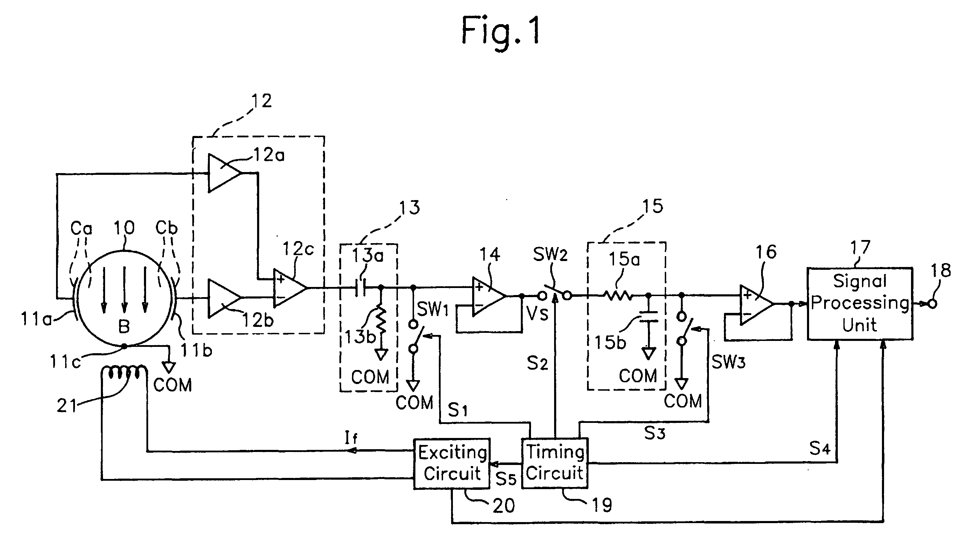

Now, the embodiment of the present invention is described with reference to the drawing. FIG. 1 is a block diagram showing the construction of an embodiment of the present invention. 10 is an insulating conduit in which an electrically conductive fluid to be measured Q flows.

First, the description is made based on a capacitance type electromagnetic flowmeter which detects the flow rate of a liquid to be measured through capacitance.

Detecting electrodes 11a and 11b are fixed to the conduit 10 so as to be insulated from the liquid to be measured Q, and coupled to the fluid to be measured Q through capacitances $C_a$ and $C_b$. Further, a ground electrode 11c contacted with the liquid is connected to a common potential point COM.

A preamplifier 12 consists of buffer amplifiers 12a and 12b, and a differential amplifier 12c, and the detecting electrodes 11a and 11b are connected to the input terminals of the buffer amplifiers 12a and 12b of the preamplifier 12.

The output terminals of those buffer amplifiers are connected to the input terminals of the differential amplifier 12c, respectively.

The output terminal of the differential amplifier 12c is connected to a high-pass filter 13 which functions as a.c. coupling means. The high-pass filter 13 is selected so that it has a sufficient passband for the excitation waveform.

Further, the high-pass filter 13 consists of a capacitor 13a and a resistor 13b, and one terminal of the capacitor 13a is connected to the output terminal of the differential amplifier 12c, while the other terminal of the capacitor 13a is connected to the common potential point COM through the resistor 13b.

The junction of the capacitor 13a and the resistor 13b is connected to an input terminal of a buffer amplifier 14, and to the common potential point COM through a switch $SW_1$ the opening and closing of which are controlled by a control signal $S_1$.

The output terminal of the buffer amplifier 14 is connected to a hold circuit 15 through a switch $SW_2$ the opening and closing of which are controlled by a control signal $S_2$. The hold circuit 15 consists of a resistor 15a and a capacitor 15b, and one terminal of the resistor 15a is connected to the $SW_2$, while the other terminal thereof is connected to the common potential point COM through the capacitor 15b.

The junction of the resistor 15a and the capacitor 15b is connected to an input terminal of a buffer amplifier 16, and to the common potential point COM through a switch $SW_3$ the opening and closing of which are controlled by a control signal $S_3$.

The output terminal of the buffer amplifier 16 is connected to a signal processing unit 17. The signal processing unit 17 includes an analog-to-digital converter, a microprocessor, a memory, and the like, and it calculates and outputs a flow rate signal to an output terminal 18.

A timing circuit 19 outputs control signals $S_1$, $S_2$, $S_3$, $S_4$, and $S_5$ to the switches $SW_1$, $SW_2$, and $SW_3$, the signal processing unit 17, and an exciting circuit 20, respectively, to control the opening and closing of them. The exciting circuit 20 is controlled by the control signal $S_5$ for its switching timing so that, for instance, it controls the waveform of an exciting current $I_f$ flowing through an exciting coil 21 to a triangular wave, and further controls the repetition cycle of the switching.

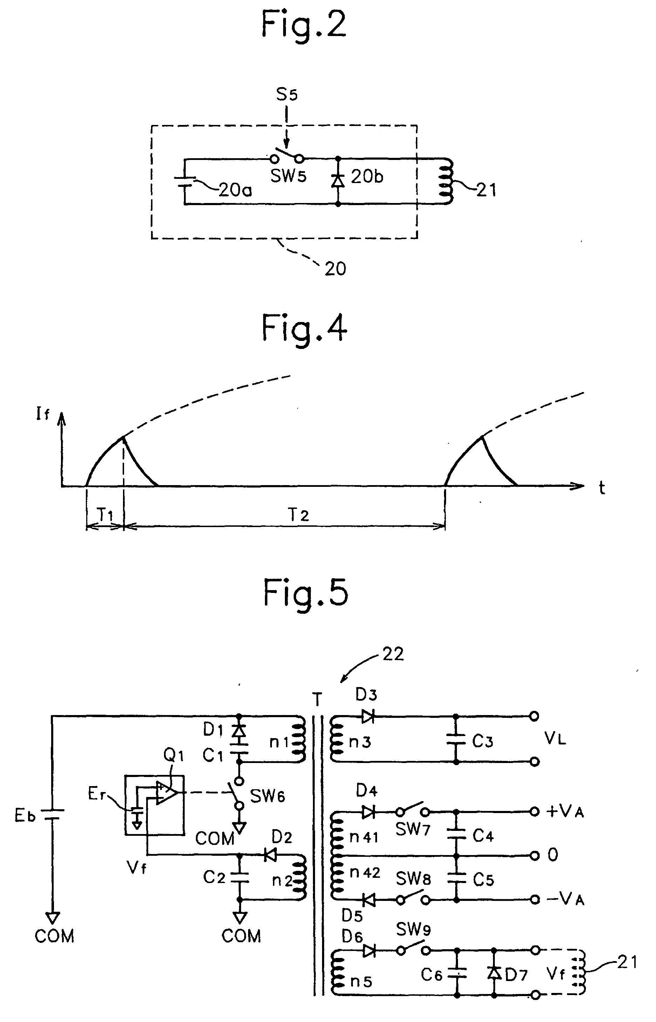

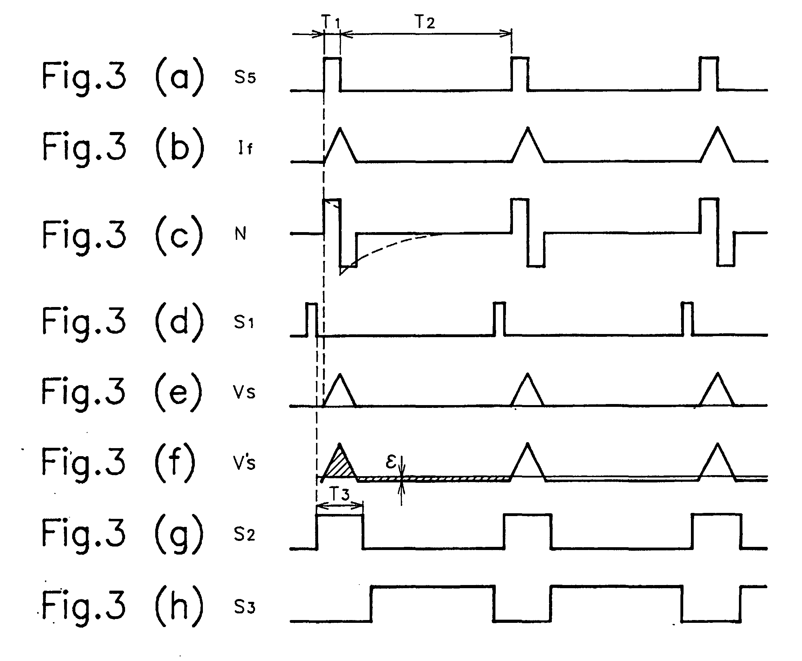

The exciting circuit 20 specifically consists of, for instance, a d.c. power supply 20a, a switch $SW_5$, a diode 20b, and the like, as shown in FIG. 2, and the opening and closing of the switch $SW_5$ is controlled by the control signal $S_5$ to generate a quasi-triangular wave, which is provided to the exciting coil 21. The d.c. power supply 20a may be formed of, for instance, a battery of the type which can be or cannot be recharged.

The operation of the embodiment shown in FIG. 1 is described below by using the waveform diagrams shown in FIGS. 3 and 4. The timing circuit 19 sends out to the exciting circuit 20 the control signal $S_5$ which repeats an excitation period $T_1$ and a non-excita-

tion period $T_2$, as shown in FIG. 3 (a).

By this control signal $S_5$, the switch $SW_5$ shown in FIG. 2 is controlled to be turned on during the excitation period $T_1$ and to be turned off during the excitation period $T_2$, respectively. When the switch $SW_5$ is turned on, the excitation current If increases from the d. c. power supply 20a to the exciting coil 21 during the excitation period $T_1$ and with a time constant determined by the resistance $R_f$ and inductance $L_f$, as shown in FIG. 4.

However, when the excitation period $T_1$ elapses, the switch $SW_5$ is turned off, and thus the energy supply from the d.c. power supply 20a is stopped, the energy stored in the exciting coil 21 is discharged through the diode 20b, and the exciting current $I_f$ decreases as shown in FIG. 4. When the non-excitation period $T_2$ elapses, the switch $SW_5$ is again turned on, and energy is supplied from the d.c. power supply 20a to the exciting coil 21.

Thereafter, by repeating this, a quasi-triangular wave can be supplied to the exciting coil 21. In FIG. 3 (b), the exciting current $I_f$ shaped in a triangular wave obtained in this way is depicted.

When the exciting current $I_f$ shaped in a triangular wave is made to flow through the exciting coil 21, as described above, a magnetic field having a magnetic flux density B of a shape substantially similar to this triangular waveform is applied to the fluid to be measured Q, and a signal voltage $e_s$ having a similar waveform is generated in the fluid to be measured Q.

Since the magnetic flux density B interlinks with the signal line loop connecting the detecting electrodes 11a and 11b with the preamplifier 12, a superposed differential noise N generated according to the change in the magnetic flux density B appears between the detecting electrodes 11a and 11b in addition to the signal voltage $e_s$. The waveform of the differential noise N is shown by a solid line in FIG. 3 (c).

As described above, since the electrode capacity is very small, usually several tens to several thousands pF, in the construction of detecting the signal voltage by the detecting electrodes 11a and 11b through the capacitances Ca and Cb, as shown in FIG. 1, the charging/discharging time constant of the electrode impedance due to the eddy current generated in the liquid to be measured Q becomes sufficiently small , and thus the differential noise N substantially becomes only the component shown by a solid line in FIG. 3 (c), which is proportional to the time differential of the exciting current.

On the other hand, the waveform shown by a dashed line in FIG. 3 (c) is for the conventional liquid-contact type electromagnetic flowmeter. In the construction in which the detecting electrodes are put in contact with a liquid, the electrode capacity formed by the detecting electrodes and the fluid to be measured is as large as 0.1 to 10 μF, and the electrochemical surface condition of the detecting electrode is unstable. Thus, by the effect of the eddy current flowing in the liquid to be measured, the waveform takes a long tail-like shape as shown by a dashed line in FIG. 3 (c).

The voltage ($e_s$+N) generated between the detecting electrodes 11a and 11b as described above is outputted to the buffer amplifier 14 through the preamplifier 12 and the high-pass filter 13.

The output voltage $V_s$ shown in FIG. 3 (e), which corresponds to the voltage ($e_s$+N) appearing at the output terminal of the buffer amplifier 14, is integrated and, sampled and held in the hold circuit 15 by turning on the switch $SW_2$ for a fixed time $T_3$ by means of the control signal $S_2$ (FIG. 3 (g)) for sampling.

It is only needed that the fixed time $T_3$ is initiated earlier than the rise of the excitation interval shown in FIG. 3 (a) and is given a time width of an extent that the differential noise N shown in FIG. 3 (c) disappears.

In this case, before sampling the output voltage $V_s$ in the hold circuit 15 by turning on the switch $SW_2$, the output terminal of the high-pass filter 13 is reset by turning on the switch $SW_1$ by the control signal $S_1$ as shown in FIG. 3 (d), and it is fixed to a reference potential. By performing such reset operation, the signal voltage generated correspondingly to the excitation period $T_1$ starts exactly at the reference potential at the common potential point COM, as shown in FIG. 3 (e), even if there is a d.c. voltage change in the detecting electrodes 11a, 11b, or the preamplifier 12.

Accordingly, the output voltage $V_s$ shown in FIG. 3 (e) is integrated in the hold circuit 15 for the fixed time $T_3$ shown in FIG. 3 (g), and thus a voltage accurately proportional to the flow rate is obtained. In addition, the differential noise N shown in FIG. 3 (c) does not affect the output since the positive and negative components of the differential noise N are offset to zero.

Further, by setting the fixed time $T_3$ shown in FIG. 3 (g) to an integral multiple of the period of the commercial frequency of the site where the detector is installed, the positive and negative waveforms of the commercial frequency can be canceled to remove the induction noise due to the commercial frequency.

The hold circuit 15 is made ready for the next signal processing by turning on the switch $SW_3$ by means of the control signal $S_3$ shown in FIG. 3 (h) to discharge the capacitor 15b. The sampling voltage obtained in this way is outputted to the signal processing unit 17 through the buffer amplifier 16.

The signal processing unit 17 receives the information on the control of the exciting current to be outputted from the timing circuit 19 to the exciting circuit 20 through the control signal $S_4$, and calculates and outputs the instantaneous flow rate, integrated flow rate, or the like to the output terminal 18 according to the application of the flowmeter. In addition, it can also obtain the value of the exciting current $I_f$ from the exciting circuit 20 and calculate the ratio of the signal value and the exciting current value in the flow rate calculation, thereby for compensating the span.

Further, in the conventional electromagnetic flowmeter in which the reset operation by the switch $SW_1$ is not performed, a change with the time constant of the high-pass filter 13 occurs till the point when the diagonally shaded upper and lower portions of the d.c. potential in FIG. 3 (f) generated from the preamplifier 13 or the like balance each other. Since a remaining amount $\varepsilon$ with a polarity opposite to the signal in this case depends on the magnitude of the signal voltage $e_s$, a simple signal sampling during the fixed time $T_3$ may cause an error.

Moreover, generally, if the excitation level is lowered to achieve a low power consumption, S/N decreases and the output fluctuation increases, and in addition, the amplitude of the analog signal of the flow rate signal sampled for each excitation is largely varied by a noise. Accordingly, the dynamic range of the analog-to-digital converter included in the signal processing unit 17 must be made large, by which the resolution is reduced.

However, in the embodiment shown in FIG. 1, the output fluctuation can be reduced by constructing the hold circuit 15 of a low-pass filter and adding a damping to the sample voltage sampled by the switch $SW_2$, so that such inconvenience can be avoided. In this case, if the on/off time ratio of the switch $SW_2$ is assumed to be $\beta$, the damping $\beta$ times the time constant of the hold circuit 15 is added in this portion.

FIG. 5 is a power supply circuit diagram showing the construction of the d.c. power supply including the exciting circuit 20. A power supply circuit 22 in this case is shown as an example of the switching power supply circuit. A d.c. power supply $E_b$ is connected to the common potential point COM through the primary coil $n_1$ of a transformer T and the switch $SW_6$. To both ends of the primary coil $n_1$, a diode $D_1$ and a capacitor $C_1$ are connected in series.

Further, to both ends of the feedback coil $n_2$ of the transformer T, a diode $D_2$ and a capacitor $C_2$ are connected in series, and a feedback voltage $V_f$ generated across the capacitor $C_2$ is applied to the inverting input terminal (-) of a deviation amplifier $Q_1$, to the non-inverting input terminal (+) of which a reference voltage $E_r$ is applied. The on/off control of the switch $SW_6$ is performed by the output of the deviation amplifier $Q_1$.

To the secondary coil $n_3$ of the transformer T, a diode $D_3$ and a capacitor $C_3$ are connected in series, and a logic voltage $V_L$ is obtained from both ends of the capacitor $C_3$. The logic voltage $V_L$ is normally turned on and used as the voltage of a power supply for generating each timing signal.

The tertiary coil $n_4$ of the transformer T consists of coils $n_{41}$ and $n_{42}$ which are connected in series, and between the junction of these coils and the other end of the coil $n_{41}$, a diode $D_4$, a switch $SW_7$, and a capacitor $C_4$ are connected in series. From both ends of the capacitor $C_4$, a positive voltage $+V_A$ is obtained as the voltage for an analog power supply.

In addition, between the junction and the other end of the coil $n_{42}$, a diode $D_5$, a switch $SW_8$, and a capacitor $C_5$ are connected in series, and from both ends of the capacitor $C_5$, a negative voltage $-V_A$ is obtained as the voltage for the analog power supply.

To the fourth coil $n_5$ of the transformer T, a diode $D_6$, a switch $SW_9$, and a capacitor $C_6$ are connected in series, and a diode $D_7$ is connected in parallel with the capacitor $C_6$, from both ends of which an exciting voltage $V_f$ is obtained.

The switches $SW_7$ to $SW_9$ are turned on only in the vicinity of the intermittent excitation to supply power to a load, respectively, and they are otherwise turned off to achieve the overall power saving. As the d.c. power supply $E_b$, a battery or the like can be used.

Further, the deviation amplifier $Q_1$ performs the on/off control of the switch $SW_6$ so that a voltage corresponding to the reference voltage $E_r$ is generated, thereby supplying a fixed voltage from the secondary coil to the fourth coil in response to the status of the load.

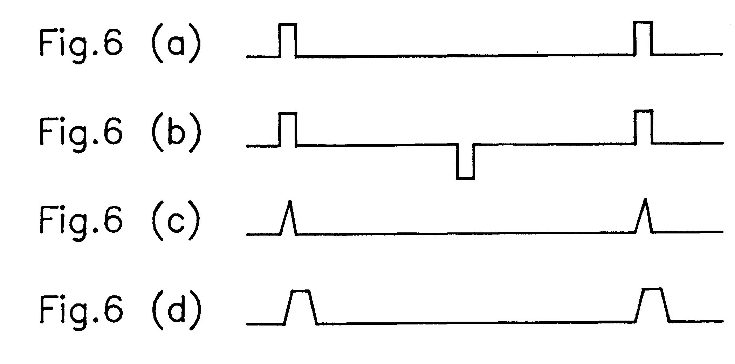

Incidentally, the above description has been made on the assumption that the waveform of the exciting current If is a quasi-triangular wave, but this is only by way of example and not restrictive. FIG. 6 shows other examples of the excitation waveform.

FIG. 6 (a) shows a rectangular excitation waveform, and FIG. 6 (b) shows positive and negative rectangular excitation waveforms which are alternately inserted; the amount of signals can be doubled by performing a synchronous rectification between the positive and negative excitations.

Further, FIG. 6 (c) shows a triangular excitation waveform which can simplify the exciting circuit. FIG. 6 (d) shows an example of a trapezoidal excitation waveform, if the exciting pulse is shortened, the rectangular excitation shown in FIG. 6 (a) also becomes this trapezoidal wave excitation.

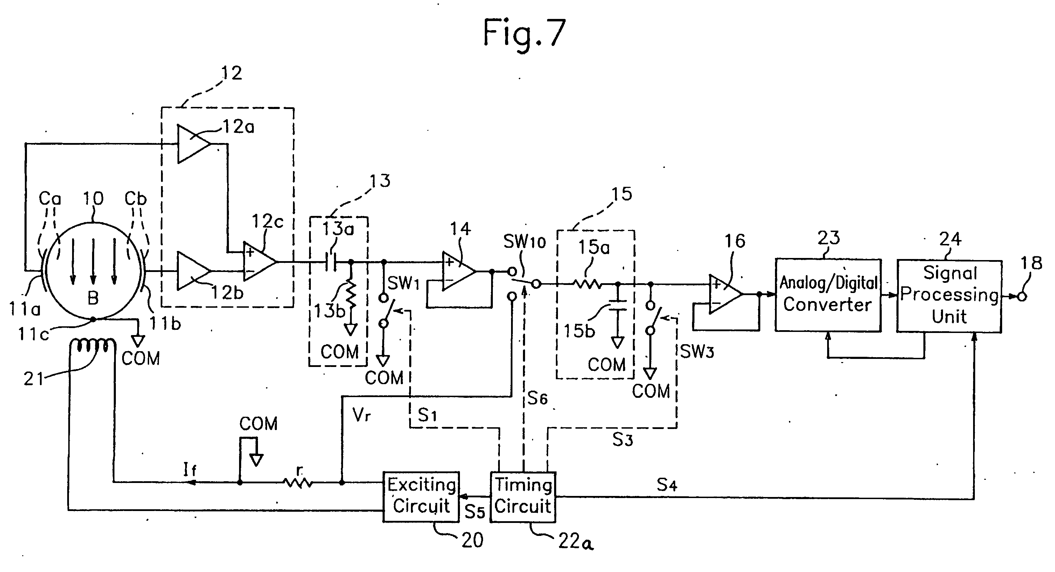

FIG. 7 is a block diagram showing the construction of another embodiment of the present invention. In this construction, the reference voltage for the exciting current value is taken in at a predetermine cycle, and the reference voltage is used to calculate the ratio to the signal voltage by software, thereby for compensating the span variation.

The portions having the same symbols as those shown in FIG. 1 are assigned the same symbols and the description thereof is appropriately omitted.

The description is made specifically below. A reference resistance r is connected in series to the exciting coil 21 in the construction shown in FIG. 1, and a reference voltage $V_r$ is taken out from both ends of the resistance r and applied to one switching terminal of a switch $SW_{10}$.

Normally, the common terminal of the switch $SW_{10}$ is connected to one of the switching terminals by a control signal $S_6$ outputted from a timing circuit 22a, thereby to sample a signal voltage $e_s$ in a hold circuit 15.

In addition, the switch $SW_{10}$ is switched to the other switching terminal thereof by the control signal $S_6$ at a period longer than the sampling period of the signal voltage $e_s$, and the reference voltage $V_r$ is sampled in the hold circuit 15.

This sampling value is converted to a digital signal in an analog-to-digital converter 23 through a buffer amplifier 16, taken into a signal processing unit 24, and stored in a predetermined region of the memory contained in the unit 24.

In this case, the signal processing unit 24 has the same construction as the signal processing unit 17 except that the portion corresponding to the analog-to-digital converter 23 is removed. The signal processing unit 24 uses this to calculate the ratio to the signal voltage $e_s$ by a software processing, and outputs it to an output terminal 18 as a flow rate signal. This allows the compensation of the span variation.

Such method has the following advantages. <1> Since the hold circuit 15, buffer amplifier 16, and analog-to-digital converter 23 equally contribute to the flow rate signal and the reference voltage $V_r$, the effect of the drift of each element can be removed. <2> Since only one hold circuit 15 and one buffer amplifier 16 are required, respectively, the hardware configuration is simple.

In the embodiment shown in FIG. 1, the description has been made based on the construction in which the switch $SW_1$ is turned on for resetting immediately before the signal sampling, but it is also possible to keep the switch $SW_1$ on during the non-excitation period and change this switch to off between before and after the excitation period of the signal.

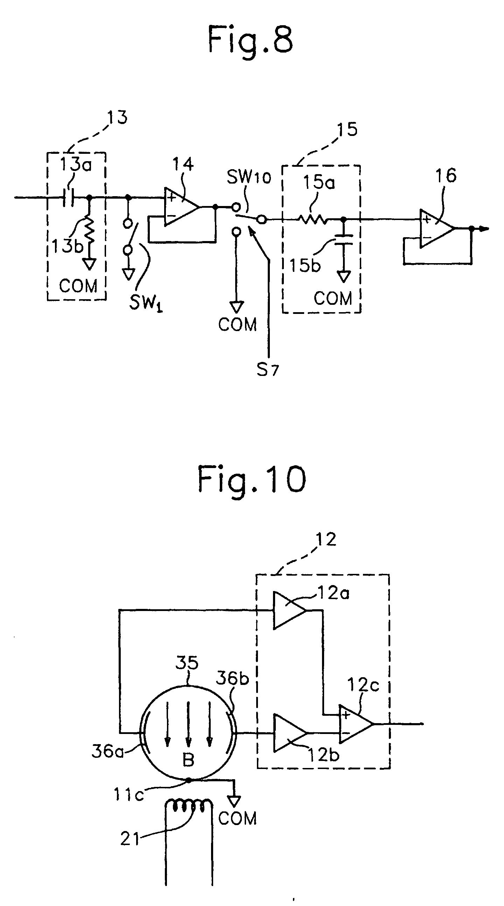

In addition, in the embodiment shown in FIG. 1, the description has been made based on the construction in which two switches $SW_2$ and $SW_3$ are used, but this may be replaced by a construction in which one switch $SW_{10}$ is used and it is switched by a control signal $S_7$, as shown in FIG. 8. This combines the signal sampling and the resetting of the hold circuit 15.

Specifically, the control signal $S_7$ is a control signal such as obtained by integrating the control signals $S_1$ and $S_3$, and it is normally switched to the reference voltage of the common potential point COM side and controlled to switch to the output terminal of the buffer amplifier 14 only for the signal sampling.

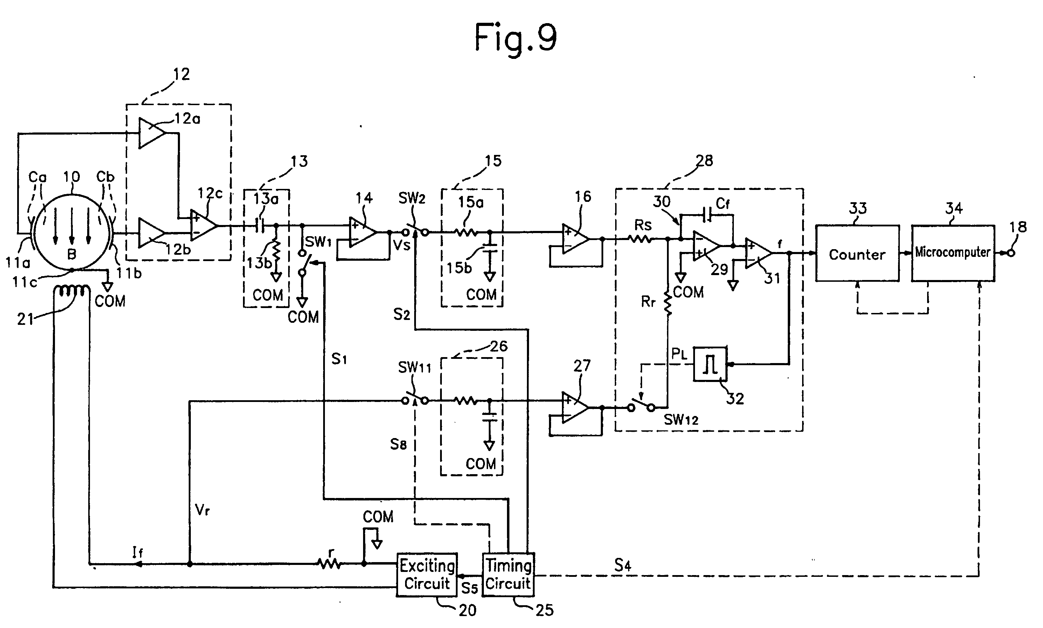

FIG. 9 is a block diagram showing the construction of the third embodiment of the present invention. A reference voltage $V_r$ is detected in a reference resistance r, held in a hold circuit 26 through a switch $SW_{11}$ for sampling which is controlled by a control signal $S_8$ outputted from a timing circuit 25, and taken out through a buffer amplifier 27.

A voltage/frequency converter circuit 28 comprises a resistances $R_s$ and $R_r$, an integrator 30 consisting of an operational amplifier 29, the non-inverting input terminal (+) of which is connected to the common potential point COM and the inverting input terminal (-) is connected to the output terminal by a capacitor $C_f$, a comparator 31, a one-shot circuit 32, and a switch $SW_{12}$.

Further, the outputs of buffer amplifiers 16 and 27 are applied to the inverting input terminal (-) of the operational amplifier 29 through the resistances $R_s$ and $R_r$, and the switch $SW_{12}$, respectively. The output of the operational amplifier 29 is applied to the non-inverting input terminal (+) of the comparator 31, the inverting input terminal (-) of which is connected to the common potential terminal COM, and the output of the comparator 31 is outputted to a counter 33 and applied to the one-shot circuit 32.

The switch $SW_{12}$ is turned on for a fixed time by the pulse outputted from the one-shot circuit 32. The count in the counter 33 is periodically read by a microcomputer 34. In the above construction, the flow rate signal is integrated in the integrator 30 through the resistance $R_s$, and when the integrated output reaches a fixed level, the comparator 31 operates and a pulse $P_L$ having a fixed time width $\tau$ is outputted from the one-shot circuit 32.

The pulse $P_L$ turns on the switch $SW_{12}$ for the fixed time $\tau$ to cause the reference voltage $V_r$ having the polarity opposite to the flow rate signal to be inputted to the integrator 30 through the resistance $R_r$, thereby for resetting the integrator 30 and the comparator 31.

By the above operation, the frequency f generated at the output of the comparator 31 is expressed by

$$f = (R_r V_{sp}/R_s V_{rp})$$

if it is assumed that $V_{sp}$ is the hold voltage held in the hold circuit 15 and $V_{rp}$ is the hold voltage held in the hold circuit 26, and thus the frequency signal f which is independent of the capacitor $C_f$ for integration or the variation of the operation voltage of the circuit can be obtained.

In addition, a control signal $S_8$ turns on the switch $SW_{11}$ with a timing similar to the control signal $S_2$ or $S_6$ during any period in which the control signal $S_2$ is not turned on, thereby for sampling the reference voltage. The microcomputer 34 periodically reads in a count value corresponding to the ratio of the flow rate voltage of the counter 33 and the reference voltage thereby to know the flow rate.

Since the embodiment shown in FIG. 9 is constructed so as to perform the calculation of the rate of the flow rate voltage and the reference voltage by hardware, the burden on the software of the microcomputer 34 can be reduced as compared with the processing method by software shown in FIG. 7.

The reduction of the burden can lengthen the operation time in the low power consumption mode of the microprocessor such as the sleep mode provided to the recent low power consumption type microprocessor, thereby to reduce the power consumption to, for instance, 1/5 to 1/2.

Although the description has been made based on the capacitance type electromagnetic flowmeter to clarify the difference between the prior art, even the liquid-contact type electromagnetic flowmeter in which the detecting electrodes are in contact with a fluid to be measured can be applied as is the capacitance type, as described below, provided that a certain condition is allowed.

FIG. 10 shows the construction of the vicinity of the flow rate detecting unit of the liquid-contact type electromagnetic flowmeter. To a conduit 35, detecting electrodes 36a and 36b put in contact with a liquid to be measured Q are fixed, and the remaining construction is basically similar to that shown in FIG. 1.

For the capacitance type, since the electrode capacity is very small, the charging/discharging time constant of the electrode impedance due to the eddy current occurring in the liquid to be measured Q becomes sufficiently small, and thus it can be applied even if a fast response with a short repetition cycle of excitation is required.

On the other hand, for the liquid-contact type, since the electrode capacity formed by the detecting electrodes 36a and 36b, and the liquid to be measured Q becomes large, the differential noise N trails as shown by a dotted line in FIG. 3 (c), and thus a long excitation period is needed and a fast response cannot be expected.

However, for an application which permits a slow response, for instance, for an application as an integrating flowmeter such as a water meter, by resetting the switch $SW_1$ placed after the high-pass filter 13 with a predetermined timing when the differential noise N disappears, the initial value of the integration can accurately set to zero at the initial stage of the integration by the hold circuit 15, so that good S/N can be obtained.

In particular, for instance, as the electromagnetic flowmeter for city water for measuring the amount of water which is used, an electromagnetic flowmeter the total power consumption of which is about 1 mW can be achieved if the on/off ratio of excitation is set to about 1/100 or less and a state-of-the-art low power device is used.

If the power consumption is as small as described above, an electromagnetic flowmeter requiring no external wiring can be constructed by using a battery as a driving power supply, and thus the measuring of a flow rate can be performed in areas where there is no power supply facilities.

In addition, in the event that a battery is used as a driving power supply, even if the output deviation from the S/N level in the measurement of an instantaneous flow rate becomes somewhat large, it is possible to achieve a flowmeter which can sufficiently be used for the application as a water meter for measuring an integrated flow rate.

The present invention has been specifically described above along with the embodiments, and in accordance with the inventions recited in the respective claims, there are the following effects.

In accordance with the inventions described in the first claim, third claim, and fourth claim, an exciting current is caused to intermittently flow with the excitation period shorter than the non-excitation period thereby to apply a magnetic field to a fluid to be measured, the inter-electrode signals outputted from detecting electrodes are coupled by a.c. coupling to obtain an a.c. signal, which is sampled and held by a sampling signal, and a switching to a reference potential is performed before and after the period of the sampling and holding. Thus, not performing synchronous rectification, a flow rate signal can be sampled without causing an error. Further, it is possible to contribute to the increase of S/N while maintaining the power saving function.

In accordance with the invention described in the second claim, there is the following effect in addition to the effect of the invention described in the first claim. That is, since it is constructed as a capacitance type, the electrode capacity is very small and the charging/discharging time constant of the electrode impedance by the eddy current occurring in a liquid to be measured becomes sufficiently small. Thus, the differential noise is rapidly attenuated and the signal can be detected while removing the differential noise with a short sampling width, and the signal can be processed in a frequency band of good S/N against a flow noise having 1/f characteristics while assuring a fast response with a short repetition cycle of excitation.

In accordance with the invention described in the fifth claim, since a triangular wave or a quasi-triangular wave can be created by applying a voltage to the exciting coil and turning off the exciting current rising in the exciting coil with an appropriate timing, the exciting circuit can be simplified and the power consumed for excitation can be made small.

In accordance with the invention described in the sixth claim, since a construction is provided for calculating the ratio of the sampling signal and the reference voltage, the span error due to the variation of the exciting current can easily be removed.

In accordance with the invention described in the seventh claim, since a construction is provided in which the switching cycle of the sample switch on the reference voltage side is a fraction of that on the a.c. signal side, the response to a flow rate change can be made fast while correcting the span due to the reduction of the capacity of a battery or the like.

In accordance with the invention described in the eighth claim, since the power supply voltage for the analog circuit can be supplied only in the period corresponding to the sampling width, or the excitation period, the power saving can easily be achieved as a whole.

In accordance with the invention described in the ninth claim, since an electromagnetic flowmeter containing a battery can be constructed, no external wiring is required and the measuring of a flow rate can be performed even in areas where no power supply facilities is provided.

In accordance with the invention described in the tenth claim, since the calculation of the ratio of the flow rate signal and the reference signal can be carried out by a piece of hardware such as a voltage/frequency converter, the burden of software calculations in the microcomputer can be reduced, and the power consumption can largely be saved as a whole.

## Claims

1. An electromagnetic flowmeter for converting the flow rate of a fluid (Q) to be measured to an electric signal and outputting a flow rate signal corresponding to said flow rate through detecting electrodes (11a, 11b), said electromagnetic flowmeter comprising:

   exciting means (21) for intermittently causing an exciting current to flow thereby to apply a magnetic field to said fluid (Q) to be measured, the excitation period of said exciting means being shorter than the non-excitation period thereof,
   a.c. coupling means (13) for obtaining an a.c. signal through an a.c. coupling of the inter-electrode signals outputted from said detecting electrodes (11a, 11b),
   first sample and hold means (14) for sampling and holding said a.c. signal with a sampling signal having a sampling width including portions before and after said excitation period, and outputting it as a first hold signal,
   switching means (SW1,SW2) for switching the output of said first sample and hold means (14) to a reference potential before and after the period of sample and hold, and
   a signal processing means (17) for using said hold signal to perform a signal processing and outputting it as said flow rate signal.

2. An electromagnetic flowmeter as set forth in claim 1 wherein said detecting electrodes (11a, 11b) detect a flow rate signal through capacitance.

3. An electromagnetic flowmeter as set forth in claim 1 wherein said detecting electrodes (11a, 11b) detect a flow rate signal by being in contact with said fluid to be measured.

4. An electromagnetic flowmeter as set forth in claim 1, 2 or 3 wherein said switching means consists of first switching means (SW1) for switching said a.c. signal and a reference potential by a first switching signal, and second switching means (SW2) for switching said hold signal and a reference potential by a second switching signal at a timing after said sample and hold.

5. An electromagnetic flowmeter as set forth in claim 1, 2 or 3 wherein the waveform of said exciting current is a triangular wave or a quasi-triangular wave.

6. An electromagnetic flowmeter as set forth in claim 1, 2 or 3 further comprising second sample and hold means (16) for sample switching from said a.c. signal to a reference voltage proportional to said exciting current, sampling and holding this with said sampling signal, and outputting it as a second hold signal, and ratio calculation means for using said first and second hold signals to calculate the ratio of said reference voltage and said a.c. signal.

7. An electromagnetic flowmeter as set forth in claim 6 wherein the switching cycle of said sample switch on said reference voltage is a fraction of that on said a.c. signal.

8. An electromagnetic flowmeter as set forth in claim 1, 2 or 3 further comprising power supply means for supplying a power supply voltage only to an analog signal processing unit in the stage preceding said signal processing means only during the period substantially corresponding to said sampling width.

9. An electromagnetic flowmeter as set forth in claim 1 wherein a battery is used as the driving power supply for said exciting means (21) and said signal processing means (17).

10. An electromagnetic flowmeter as set forth in claim 1 wherein said switching means (SW1) is set to a reference potential before said period of sample and hold,
    said flowmeter further comprising:

    second sample and hold means (16) for sampling and holding a reference voltage proportional to said exciting current with a second sampling signal and outputting it as a second hold signal,
    voltage/frequency converter means (28) for neutralizing said first hold signal with said second hold signal to calculate and output the ratio of them as a frequency signal,
    counter means (33) for counting said frequency signal, and
    a microcomputer (34) for periodically read in the result of the counting, and calculating and outputting a flow rate signal.

**Patentansprüche**

1. Elektromagnetischer Strömungsmesser zum Umsetzen des zu messenden Durchsatzes eines Fluids (Q) in ein elektrisches Signal und zum Ausgeben eines Durchsatzsignals entsprechend dem Durchsatz durch Detektorelektroden (11a, 11b), wobei der elektromagnetische Strömungsmesser aufweist:

eine Erregereinrichtung (21), die einen Erregerstrom intermittierend fließen lässt, um dadurch ein Magnetfeld an das zu messende Fluid anzulegen, wobei die Erregungsperiode der Erregereinrichtung kürzer als deren Nichterregungsperiode ist,
eine Wechselstrom-Kopplungseinrichtung (13) zum Gewinnen eines Wechselstromsignals durch Wechselstromkopplung der Zwischenelektrodensignale, die von den Detektorelektroden (11a, 11b) ausgegeben werden,
eine erste Abtast- und Halteeinrichtung (14) zum Abtasten und Halten des Wechselstromsignals mit einem Abtastsignal, das eine Abtastbreite mit Teilen vor und nach der Erregungsperiode aufweist, und zum Ausgeben von diesem als einem ersten Haltesignal,
eine Schalteinrichtung (SW1, SW2) zum Schalten des Ausganges der ersten Abtast- und Halteeinrichtung (14) auf ein Bezugspotential vor und nach der Periode des Abtastens und Haltens und
eine Signalverarbeitungseinrichtung (17) zum Verwenden des Haltesignals, um eine Signalverarbeitung auszuführen und dieses als das Durchsatzsignal auszugeben.

2. Elektromagnetischer Strömungsmesser gemäß Anspruch 1, bei dem die Detektorelektroden (11a, 11b) ein Durchsatzsignal mittels Kapazität erfassen.

3. Elektromagnetischer Strömungsmesser gemäß Anspruch 1, bei dem die Detektorelektroden (11a, 11b) ein Durchsatzsignal erfassen, indem sie in Kontakt mit dem zu messenden Fluid sind.

4. Elektromagnetischer Strömungsmesser gemäß Anspruch 1, 2 oder 3, bei dem die Schalteinrichtung aus einer ersten Schalteinrichtung (SW1) zum Schalten des Wechselstromsignals und eines Bezugspotentials durch ein erstes Schaltsignal und einer zweiten Schalteinrichtung (SW2) zum Schalten des Haltesignals und eines Bezugspotentials durch ein zweites Schaltsignal mit einer Zeitsteuerung nach dem Abtasten und Halten besteht.

5. Elektromagnetischer Strömungsmesser gemäß Anspruch 1, 2 oder 3, bei dem der Signalverlauf des Erregerstromes eine Dreieckwelle oder eine Quasi-Dreieckwelle ist.

6. Elektromagnetischer Strömungsmesser gemäß Anspruch 1, 2 oder 3, ferner mit einer zweiten Abtast- und Halteeinrichtung (16) zum Abtast-Schalten von dem Wechselstromsignal zu einer Bezugsspannung proportional zu dem Erregerstrom, Abtasten und Halten von diesem mit dem Abtastsignal und Ausgeben von diesem als ein zweites Haltesignal, und mit einer Verhältnisrecheneinrichtung zum Verwenden der ersten und zweiten Haltesignale, um das Verhältnis der Bezugsspannung und des Wechselstromsignals zu berechnen.

7. Elektromagnetischer Strömungsmesser gemäß Anspruch 6, bei dem der Schaltzyklus des Abtastschaltens auf die Bezugsspannung ein Bruchteil von demjenigen auf das Wechselstromsignal ist.

8. Elektromagnetischer Strömungsmesser gemäß Anspruch 1, 2 oder 3, ferner mit einer Leistungsversorgungseinrichtung zum Liefern einer Leistungsversorgungsspannung lediglich an eine analoge Signalverarbeitungseinheit in der der Signalverarbeitungseinrichtung vorhergehenden Stufe lediglich während der Periode, die im wesentlichen der Abtastbreite entspricht.

9. Elektromagnetischer Strömungsmesser gemäß Anspruch 1, bei dem eine Batterie als die Ansteuerleistungsversorgung für die Erregereinrichtung (21) und die Signalverarbeitungseinrichtung (17) verwendet wird.

10. Elektromagnetischer Strömungsmesser gemäß Anspruch 1, bei dem das Schaltmittel (SW1) auf ein Bezugsspannungspotential vor der Periode des Abtastens und Haltens gesetzt ist, wobei der Strömungsmesser ferner aufweist:

eine zweite Abtast- und Halteeinrichtung zum Abtasten und Halten einer Bezugsspannung proportional zu dem Erregerstrom mit einem zweiten Abtastsignal und zum Ausgeben von diesem als ein zweites Haltesignal,
eine Spannungs/Frequenzumsetzereinrichtung zum Neutralisieren des ersten Haltesignals mit dem zweiten Haltesignal, und um das Verhältnis von diesen als ein Frequenzsignal zu berechnen und auszugeben,
eine Zählereinrichtung zum Zählen des Frequenzsignals
und einen Mikrocomputer zum periodischen Einlesen des Ergebnisses des Zählens und zum Berechnen und Ausgeben eines Durchsatzsignals.

**Revendications**

1. Débitmètre électromagnétique pour convertir le débit d'un fluide (Q) à mesurer en un signal électrique et pour délivrer en sortie, par l'intermédiaire d'électrodes (11a, 11b) de détection, un signal de débit correspondant audit débit, ledit débitmètre électromagnétique comportant :

   des moyens (21) d'excitation pour amener de manière intermittente un courant d'excitation à circuler de manière à appliquer un champ magnétique audit fluide (Q) à mesurer, la durée d'excitation desdits moyens d'excitation étant plus courte que la durée de non-excitation de ceux-ci,
   des moyens (13) de couplage en courant alternatif pour obtenir un signal en courant alternatif à travers un couplage en courant alternatif des signaux inter-électrodes délivrés en sortie à partir desdites électrodes (11a, 11b) de détection,
   des premiers moyens (14) d'échantillonnage et de retenue pour échantillonner et retenir ledit signal en courant alternatif avec un signal d'échantillonnage présentant une largeur d'échantillonnage comportant des parties avant et après ladite durée d'excitation, et pour le délivrer en sortie comme premier signal de retenue, des moyens (SW1, SW2) de commutation pour commuter la sortie desdits premiers moyens (14) d'échantionnage et de retenue sur un potentiel de référence avant et après ladite durée d'échantillonnage et de retenue, et
   des moyens (17) de traitement de signal pour utiliser ledit signal de retenue de manière à exécuter un traitement de signal et le délivrer en sortie en tant que ledit signal de débit.

2. Débitmètre électromagnétique tel qu'indiqué dans la revendication 1, dans lequel lesdites électrodes (11a, 11b) de détection détectent un signal de débit par un condensateur.

3. Débitmètre électromagnétique tel qu'indiqué dans la revendication 1, dans lequel lesdites électrodes (11a, 11b) de détection détectent un signal de débit en étant en contact avec ledit fluide à mesurer.

4. Débitmètre électromagnétique tel qu'indiqué dans la revendication 1, 2 ou 3, dans lequel lesdits moyens de commutation consistent en des premiers moyens (SW1) de commutation pour commuter ledit signal en courant alternatif et un potentiel de référence par un premier signal de commutation, et des seconds moyens (SW2) de commutation pour commuter ledit signal de retenue et un potentiel de référence par un second signal de commutation à un instant après lesdits échantillonnage et retenue.

5. Débitmètre électromagnétique tel qu'indiqué dans la revendication 1, 2 ou 3, dans lequel la forme d'onde dudit courant d'excitation est une onde triangulaire ou une onde quasi-triangulaire.

6. Débitmètre électromagnétique tel qu'indiqué dans la revendication 1, 2 ou 3, comportant au surplus des seconds moyens (16) d'échantillonnage et de retenue pour passer l'échantillonnage d'un signal en courant alternatif à une tension de référence proportionnelle audit courant d'excitation, pour l'échantillonnage et la retenue de celle-ci avec ledit signal d'échantillonnage, et pour sa délivrance en sortie comme second signal de retenue, et des moyens de calcul de rapport pour utiliser lesdits premier et second signaux de retenue pour calculer le rapport de ladite tension de référence audit signal en courant alternatif.

7. Débitmètre électromagnétique tel qu'indiqué dans la revendication 6, dans lequel le cycle de commutation dudit commutateur d'échantillonnage sur ladite tension de référence est une fraction de celui sur le signal en courant alternatif.

8. Débitmètre électromagnétique tel qu'indiqué dans la revendication 1, 2 ou 3, comportant au surplus des moyens d'alimentation électrique pour délivrer une tension d'alimentation électrique seulement à une unité de traitement de signal analogique dans l'étage précédant lesdits moyens de traitement de signal seulement pendant la durée correspondant sensiblement à ladite largeur d'échantillonnage.

9. Débitmètre électromagnétique tel qu'indiqué dans la revendication 1, dans lequel une pile est utilisée comme alimentation électrique pour lesdits moyens (21) d'excitation et lesdits moyens (17) de traitement de signal.

10. Débitmètre électromagnétique suivant la revendication 1, dans lequel les moyens (SW1) de commutation sont réglés sur un potentiel de référence avant ladite durée d'échantillonnage et de retenue, le débitmètre comportant en outre des seconds moyens (16) d'échantillonnage et de retenue pour échantillonner et retenir une tension de référence proportionnelle audit courant d'excitation avec un second signal d'échantillonnage, et pour sa délivrance en sortie comme second signal de retenue, des moyens (28) convertisseurs tension/fréquence pour neutraliser ledit premier signal de retenue avec ledit second signal de retenue pour calculer et délivrer en sortie, comme signal de fréquence, le rapport entre ceux-ci, des moyens (33) de comptage pour compter ledit signal de fréquence, et un micro-ordinateur (34) pour lire périodiquement le résultat du comptage, et pour calculer et délivrer en sortie un signal de débit.

Fig.1

# Fig.2

# Fig.4

# Fig.5

Fig.3 (a)  S5

Fig.3 (b)  If

Fig.3 (c)  N

Fig.3 (d)  S1

Fig.3 (e)  Vs

Fig.3 (f)  V's

Fig.3 (g)  S2

Fig.3 (h)  S3

$T_1$  $T_2$

$T_3$

$\varepsilon$

EP 0 730 139 B1

Fig.6 (a)

Fig.6 (b)

Fig.6 (c)

Fig.6 (d)

EP 0 730 139 B1

# Fig.7

EP 0 730 139 B1

EP 0 730 139 B1

# Fig.8

# Fig.10

17

Fig.9